# EUROPEAN PATENT APPLICATION

(11) **EP 3 725 606 A1**
(43) Date of publication of application: **21.10.2020**
(21) Application number: 18888456.3
(22) Date of filing: 28.11.2018
(51) Int. Cl.: B60S 5/06, H02J 7/00

(54) **BATTERY CHARGING AND SWAPPING STATION**

(30) Priority: 15.12.2017 CN 201711352515
(71) Applicant: Nio Nextev Limited, Hong Kong (CN)
(72) Inventor: ZHAO, Zhiling, Shanghai, 201804 (CN); YAN, Bingyong, Shanghai, 201804 (CN); QI, Wengang, Shanghai, 201804 (CN); YANG, Chao, Shanghai, 201804 (CN)
(74) Representative: Vossius & Partner Patentanwälte Rechtsanwälte mbB
(86) International application number: PCT/CN2018/117872
(87) International publication number: WO 2019/114549

(57) **Abstract**

Disclosed is a battery charging and swap station, comprising a battery charging and storage module (1) and a battery swap platform module (2), wherein the battery charging and storage module (1) is configured to dock with the battery swap platform module (2) with respect to a battery (3), and the battery swap platform module (2) is configured to exchange the battery (3) with the battery charging and storage module (1), and to swap a battery (3) of the vehicle (4).

## Description

### Technical Field

The invention relates to the field of battery swapping, and in particular to a battery charging and swap station.

### Background Art

With the popularization of new energy vehicles, how to effectively provide rapid and effective energy replenishment for vehicles with insufficient energy has become a very concerned problem for vehicle owners and major manufacturers. Taking electric vehicles as an example, the current mainstream electric energy replenishment solutions include a charging solution and a battery swapping solution. Compared with the charging solution, the battery swapping solution can swap a traction battery in a very short time and does not significantly affect the service life of the traction battery, and is therefore one of the main development directions of electric energy replenishment. The battery swapping solution is generally completed in a battery charging and swap station. The battery charging and swap station is internally provided with a battery rack for storing batteries and a battery swap platform as well as a battery swap robot, such as a Rail Guided Vehicle (RGV) or an Auto Guided Vehicle (AGV), for carrying a fresh/used traction battery between the battery rack and the battery swap platform. The battery swap robot implements the transportation of the battery and the swapping of a battery of the electric vehicle by means of reciprocating between the battery rack and the battery swap platform.

Although the battery swapping solution has many advantages mentioned above, certain problems inevitably exist. First, since the battery swap robot has the two functions of battery transportation and swapping integrated therein, the height of the battery swap robot is relatively high such that the battery swap platform needs to be provided with a dedicated lifting device to raise the electric vehicle to a higher height before the battery swap robot enter the bottom of the vehicle for battery swapping. Moreover, this configuration also requires that during the battery swapping, the driver (a passenger or a battery swap service personnel) needs to park the vehicle, gets off the vehicle and waits until the end of the battery swap process, and then gets on the vehicle and drives same away. This process is proper for safety reasons, but results in a very poor user experience. Second, for both the rail guided vehicle and the auto guided vehicle, a dedicated rail or guide line needs to be laid in the battery charging and swap station, and the rail or the guide line needs to occupy two regions, i.e. the battery rack and the battery swap platform, which fails to implement modular installation and transportation of the battery charging and swap station and causes inconveniences in transportation and installation to the manufacturer of the battery charging and swap station.

Accordingly, there is a need in the art for a novel battery charging and swap station to solve the above problems.

### Summary of the Invention

To solve the above-mentioned problems in the prior art, that is, to solve the problems of poor battery swap experience and inconvenient transportation and installation present in existing battery charging and swap stations, the invention provides a battery charging and swap station. The battery charging and swap station comprises a battery charging and storage module and a battery swap platform module, wherein the battery charging and storage module stores a plurality of batteries, and the battery charging and storage module is configured to dock with and exchange a battery with the battery swap platform module; and wherein the battery swap platform module is configured to transport the battery and to swap a battery of a vehicle.

In a preferred technical solution of the above-mentioned battery charging and swap station, the battery swap platform module comprises: a parking platform configured to position a vehicle parked thereon; a locking/unlocking unit configured to remove a used battery from the vehicle and install a fresh battery to the vehicle; and a battery transportation unit configured to transport the used battery removed by the locking/unlocking unit to the battery charging and storage module and to receive the fresh battery from the battery charging and storage module and transport the fresh battery to the locking/unlocking unit.

In a preferred technical solution of the above-mentioned battery charging and swap station, the battery transportation unit is further configured to transport the used battery removed by the locking/unlocking unit to the battery charging and storage module without lifting the vehicle, and to receive the fresh battery from the battery charging and storage module and transport the fresh battery to the locking/unlocking unit.

In a preferred technical solution of the above-mentioned battery charging and swap station, the battery transportation unit comprises a first driving mechanism and a first transmission mechanism, wherein the first driving mechanism is able to drive the first transmission mechanism to move, and the first transmission mechanism is able to carry the battery.

In a preferred technical solution of the above-mentioned battery charging and swap station, the locking/unlocking unit comprises a hoisting mechanism and a locking/unlocking mechanism, wherein the hoisting mechanism is able to hoist the locking/unlocking mechanism to a battery swap position, and the locking/unlocking mechanism is able to lock/unlock the battery at the battery swap position.

In a preferred technical solution of the above-mentioned battery charging and swap station, the locking/unlocking unit is further configured with a translation unit, wherein the translation unit enables the locking/unlocking unit to move in forward/backward direction of the vehicle.

In a preferred technical solution of the above-mentioned battery charging and swap station, the parking platform is provided with a first positioning mechanism and a second positioning mechanism, wherein the first positioning mechanism enables the vehicle to be positioned in a forward/backward direction of the vehicle, and the second positioning mechanism enables the vehicle to be positioned in a width direction of the vehicle.

In a preferred technical solution of the above-mentioned battery charging and swap station, the first positioning mechanism comprises a set of V-shaped rollers and a set of I-shaped rollers, wherein the set of V-shaped rollers enables front/rear wheels of the vehicle to be embedded therein, and the set of V-shaped rollers allows the front/rear wheels of the vehicle to move in the width direction; and the set of I-shaped rollers respectively allows the rear/front wheels of the vehicle to be supported thereon and to move in the width direction.

In a preferred technical solution of the above-mentioned battery charging and swap station, the second positioning mechanism comprises a front wheel centring push/pull rod and/or a rear wheel centring push/pull rod, wherein the front wheel centring push/pull rod and/or the rear wheel centring push/pull rod enable the vehicle to be positioned in the width direction by means of pushing/pulling the front/rear wheels of the vehicle.

In a preferred technical solution of the above-mentioned battery charging and swap station, the battery swap platform module further comprises a vehicle lifting unit and/or a leveling unit, wherein the vehicle lifting unit is able to raise the vehicle parked on the parking platform by a preset distance; and wherein the leveling unit is able to adjust the degree of parallelism of the vehicle and the parking platform.

In a preferred technical solution of the above-mentioned battery charging and swap station, the battery charging and storage module comprises a battery storage device and a battery transfer device, wherein the battery storage device stores a plurality of batteries, and the battery storage device is configured to dock with and exchange the battery with the battery transfer device; and the battery transfer device is configured to receive the used battery from the battery transportation unit and transfer the used battery to the battery storage device, and to receive the fresh battery from the battery storage device and transfer the fresh battery to the battery transportation unit.

In a preferred technical solution of the above-mentioned battery charging and swap station, the battery storage device further comprise a plurality of battery rack units, wherein each of the battery rack units is provided with a first battery transfer unit, and the first battery transfer unit is configured to enable the battery to enter/exit the battery rack unit.

In a preferred technical solution of the above-mentioned battery charging and swap station, the first battery transfer unit comprises a second driving mechanism and a second transmission mechanism, wherein the second driving mechanism is able to drive the second transmission mechanism to move, and the second transmission mechanism is able to carry the battery.

In a preferred technical solution of the above-mentioned battery charging and swap station, the battery transfer device comprises a battery lifting unit and at least one second battery transfer unit, wherein the battery lifting unit is configured to enable the at least one second battery transfer unit to ascend/descend, and the second battery transfer unit is configured to enable the battery to enter/exit the battery transfer device.

In a preferred technical solution of the above-mentioned battery charging and swap station, the battery transfer device comprises two second battery transfer units, wherein the two second battery transfer units are configured in such a way that: while or after one of the second battery transfer units receives/transfers the used battery, the other one of the second battery transfer units is able to respectively transfer/receive the fresh battery.

In a preferred technical solution of the above-mentioned battery charging and swap station, the battery lifting unit comprises a third driving mechanism and a third transmission mechanism, wherein the third driving mechanism is able to drive the third transmission mechanism to ascend/descend, and the third transmission mechanism is connected to the at least one second battery transfer unit.

In a preferred technical solution of the above-mentioned battery charging and swap station, the second battery transfer unit comprises a fourth driving mechanism and a fourth transmission mechanism, wherein the fourth driving mechanism is able to drive the fourth transmission mechanism to move, and the fourth transmission mechanism is able to carry the battery.

Those skilled in the art can understand that, in a preferred technical solution of the invention, the battery charging and swap station comprises the battery charging and storage module and the battery swap platform module, and comprises no battery swap robot. The battery charging and storage module is configured to dock with and exchange the battery with the battery swap platform module, and the battery swap platform module is configured to transport the battery and to swap the battery of a vehicle. The battery swap platform module further comprises a parking platform, a locking/unlocking unit and a battery transportation unit, wherein the battery transportation unit is further configured to transport the used battery removed by the locking/unlocking unit to the battery charging and storage module without lifting the vehicle, and to receive the fresh battery from the battery charging and storage module and transport the fresh battery to the locking/unlocking unit. By achieving the functions of the battery swap robot of transporting and replacing the battery using the battery swap platform module, the battery charging and swap station of the invention allows to complete the battery swapping without providing the battery swap robot and a vehicle lifting mechanism. This configuration eliminates the vehicle lifting process during the battery swapping, speeds up the cycle of battery swapping, and allows to complete the battery swapping without the driver getting off from the vehicle. Meanwhile, the structure of the battery charging and swap station may be greatly simplified, that is, the arrangement of the battery swap robot,the rail, and the vehicle lifting mechanism is simplified, such that modular transportation and installation of the overall station is allowed with the battery swap platform module and the battery charging and storage module as two separate modules. That is to say, the battery charging and swap station of the invention solves the problems of poor battery swap experience and inconvenient transportation and installation of the existing battery charging and swap stations, realizes miniaturization and monolithic assembly and transportation of the battery charging and swap station, reduces civil work for the battery charging and swap station, facilitates the installation and setup of the charging and replacing power station in a city, and improves battery swap efficiency and the battery swap experience.

### Brief Description of the Drawings

The battery charging and swap station of the invention will be described below with reference to accompanying drawings and in conjunction with electric vehicles. In the accompanying drawings:
Fig. 1 is a schematic structural diagram of a battery charging and swap station of the invention;
Fig. 2 is a schematic structural diagram of a set of V-shaped rollers of the invention;
Fig. 3 is a schematic structural diagram of a set of I-shaped rollers of the invention;
Fig. 4 is a schematic structural diagram of a centring push/pull rod of the invention;
Fig. 5 is a schematic structural diagram of a battery transfer device of the invention;
Fig. 6 is a schematic structural diagram (I) of the battery charging and swap station of the invention with a translation unit; and
Fig. 7 is a schematic structural diagram (II) of the battery charging and swap station of the invention with the translation unit;

### List of reference numerals

1. Battery charging and storage module; 11. Battery storage device; 111. Battery rack unit; ; 12. Battery transfer device; 121. Battery lifting unit; 1211. Third driving mechanism; 1212. Third transmission mechanism; 122. Second battery transfer unit; 13. Traverse rail; 2. Battery swap platform module; 21. Parking platform; 211. Set of V-shaped rollers; 212. Set of I-shaped rollers; 213. Centring push/pull rod; 22. Battery transportation unit; 23. Translation unit; 3. Battery; 4. Vehicle.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although the third transmission mechanism in the figures is described as chain transmission, this configuration is not invariable, and those skilled in the art may make adjustments as desired to adapt to specific applications.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "install", "couple" and "connect" should be interpreted in a broad sense unless explicitly stated and limited otherwise, and, for example, can mean a fixed connection, a detachable connection or an integral connection; can mean a mechanical connection or an electrical connection; and can mean a direct connection, an indirect connection by means of an intermediary, or internal communication between two elements. For a person skilled in the art, the specific meaning of the above terms in the invention can be interpreted according to a specific situation.

In order to solve the problems of poor battery swap experience and inconvenient transportation and installation in the existing battery charging and swap stations, by the configuration in which the battery swap robot in the battery charging and swap station is eliminated and the battery swap robot is substituted with the battery transportation unit and the locking/unlocking unit in the battery swap platform module to realize the functions of transportation and replacement of a traction battery (hereinafter referred to as battery), the invention allows miniaturization and monolithic assembly and transportation of the battery charging and swap station, speeds up the cycle of battery swapping, and improves the battery swap experience.

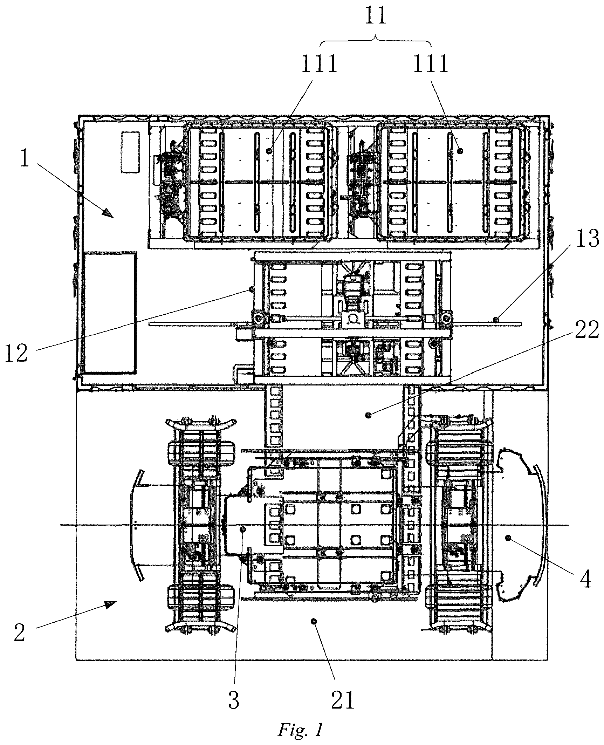

Referring to Fig. 1 first, Fig. 1 is a schematic structural diagram of a battery charging and swap station of the invention.

As shown in Fig. 1, the battery charging and swap station of the invention mainly comprises a battery charging and storage module 1 and a battery swap platform module 2, and comprises no battery swap robot. The battery charging and storage module 1 stores a plurality of batteries 3, and the battery charging and storage module 1 is configured to dock with and exchange the battery 3 with the battery swap platform module 2. The battery swap platform module 2 is configured to transport the battery 3 and swap the battery 3 for an electric vehicle. The battery swap platform module 2 further comprises a parking platform 21, a locking/unlocking unit (not shown) and a battery transportation unit 22. The parking platform 21 is configured to position the electric vehicle parked thereon, and the locking/unlocking unit is configured to remove a used battery from the electric vehicle and install a fresh battery to the electric vehicle. The battery transportation unit 22 is preferably configured to directly transport the used battery removed by the locking/unlocking unit to the battery charging and storage module 1 without lifting the electric vehicle, and to receive the fresh battery from the battery charging and storage module 1 and transport the fresh battery to the locking/unlocking unit. The battery charging and storage module 1 comprises a battery storage device 11 and a battery transfer device 12. The battery storage device 11 stores the plurality of batteries 3, and the battery storage device 11 is configured to be able to charge, discharge, and cool the batteries 3 stored thereon, and to dock with and exchange the battery 3 with the battery transfer device 12. The battery transfer device 12 is configured to receive the used battery from the battery transportation unit 22 and transfer the used battery to the battery storage device 11, and to receive the fresh battery from the battery storage device 11 and transfer the fresh battery to the battery transportation unit 22.

For example, the battery charging and storage module 1 and the battery swap platform module 2 each may be arranged in one shipping container with one open side, and the open sides of two shipping containers are assembled by means of splicing to form the battery charging and swap station of the invention. When the battery 3 is replaced for the electric vehicle parked on the parking platform 21, it is unnecessary to lift the vehicle 4, and the locking/unlocking unit first removes the used battery from the electric vehicle, and the removed used battery falls onto the battery transportation unit 22; then the battery transportation unit 22 transports the used battery out of the bottom of the vehicle and reaches the battery transfer device 12, and the battery transfer device 12 receives the used battery and then transfers the fresh battery to the battery transportation unit 22 so as to completes exchange of the battery 3 with the battery transportation unit 22; finally, the battery transportation unit 22 transports the fresh battery to the bottom of the electric vehicle, the fresh battery is installed on the electric vehicle by the locking/unlocking unit, and battery swapping is completed for the electric vehicle.

As can be seen from the above description, the invention, by means of dividing the battery charging and swap station into two modules that are functionally independent of each other, i.e. the battery charging and storage module 1 and the battery swap platform module 2, enables the battery charging and swap station to have the advantages of monolithic assembly and transportation, no civil work, and easy installation. The configuration in which the battery transportation unit 22 and the locking/unlocking unit are used instead of the existing battery swap robot may thus eliminate the provision of the battery swap robot and a lifting device and achieve the objective of replacing the battery 3 without lifting the electric vehicle, such that the battery charging and swap station has a simpler overall structure and an improved structure stability. In other words, the above-mentioned configuration reduces the construction cost of the battery swap station, improves the battery swapping stability and battery swap efficiency, and solves many problems present in the existing battery charging and swap station, such as complicated system structure, redundant process of battery swapping, and cumbersome steps for installing and transporting, and low battery swap efficiency.

It should be noted that, the above-mentioned configuration is only intended to explain the principles of the invention, and is not intended to limit the scope of protection of the invention. and adjustments may be made by those skilled in the art to the above-mentioned configuration to adapt to more specific application scenarios without departing from the principles of the invention. For example, the battery charging and storage module 1 and the battery swap platform module 2 may also be built using a frame structure, and the battery storage device 11 may also be used to only store the batteries 3 and has no functions of charging, discharging and cooling.

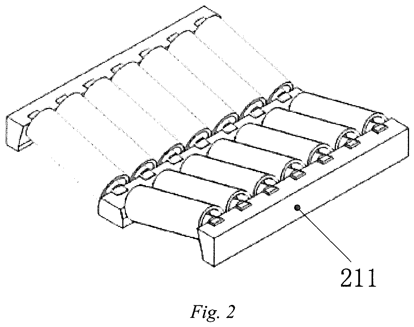

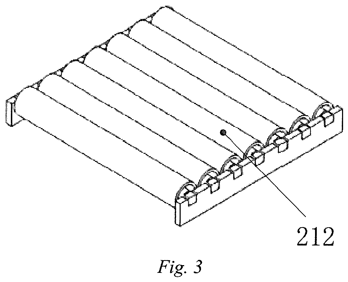

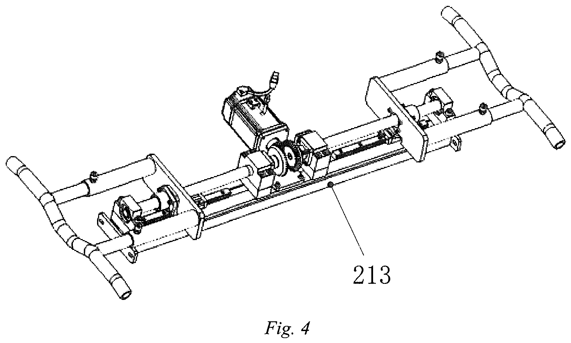

The principles of the invention will be further described below with reference to Figs. 1 to 4. Fig. 2 is a schematic structural diagram of a set of V-shaped rollers of the invention; Fig. 3 is a schematic structural diagram of a set of I-shaped rollers of the invention; and Fig. 4 is a schematic structural diagram of a centring push/pull rod of the invention.

As shown in Figs. 1 to 4, in a possible embodiment, the parking platform 21 is provided with a first positioning mechanism (not shown) capable of positioning the electric vehicle in a forward/backward direction and a second positioning mechanism (not shown in the figures) to position the electric vehicle in a width direction. The first positioning mechanism comprises two sets of V-shaped rollers 211 and two sets of I-shaped rollers 212. The two sets of V-shaped rollers 211 allow front/rear wheels of the vehicle 4 to be embedded therein so as to complete the positioning of the electric vehicle in the forward/backward direction, and the sets of V-shaped rollers 211 also enable the front/rear wheels of the vehicle 4 to move along the width direction of the electric vehicle. The two sets of I-shaped rollers 212 accordingly allow the rear/front wheels of the electric vehicle to be supported thereon and move along the width direction of the electric vehicle. The second positioning mechanism comprises a front wheel centring push/pull rod 213 and a rear wheel centring push/pull rod 213. The front wheel centring push/pull rod 213 and the rear wheel centring push/pull rod 213 may be provided as the same structure, and the front wheel centring push/pull rod 213 and the rear wheel centring push/pull rod 213 allow to position the electric vehicle in the width direction by pushing/pulling the wheels of the electric vehicle. Of course, the form and number of the first positioning mechanism and the second positioning mechanism are not invariable, and those skilled in the art may also adopt other position adjustment devices to position the electric vehicle without departing from the principles of the invention, as long as the positioning devices are able to position the electric vehicle on the parking platform 21.

Return to Fig. 1, in a possible embodiment, the battery transportation unit 22 comprises a first driving mechanism (not shown) and a first transmission mechanism (not shown) arranged on one side of the parking platform 21 close to the battery charging and storage module 1. The first driving mechanism is able to drive the first transmission mechanism to move, and the first transmission mechanism is able to carry the battery 3 and transport the battery to the locking/unlocking unit when being driven by the first driving mechanism. The first driving mechanism may be a power apparatus such as a servo motor, an electric cylinder or an air cylinder, and the first transmission mechanism may be an apparatus or a component that may carry the battery 3 and be used in cooperation with the driving mechanism, such as a sliding table, a conveyor belt, a roller wheel set or a roller set. For example, a roller wheel set is used as the first transmission mechanism, a servo motor is used as the first driving mechanism, and the whole battery transportation unit 22 is fixed on the parking platform 21 or on the ground of the battery charging and swap station, so as to achieve the transportation of the battery 3 between the locking/unlocking unit and the battery charging and storage module 1.

In a possible implementation, the locking/unlocking unit may comprise a hoisting mechanism (not shown) and a plurality of locking/unlocking mechanisms (not shown). The hoisting mechanism may lower the used battery to the roller wheel set or raise the fresh battery to the battery swap position, and the locking/unlocking mechanism may lock/unlock the battery 3 at the battery swap position. For example, the locking/unlocking mechanism is a drive motor and a locking/unlocking head (such as an inner hexagonal lock) arranged on an output shaft of the drive motor, and a plurality of locking/unlocking mechanisms may be fixed on a base plate to ensure the relative positions thereof. The hoisting mechanism may use a driving mechanism such as the air cylinder and the servo motor in cooperation with a guiding mechanism such as a guide rail, a sliding table, a cam mechanism and a rigid chain, to realize hoisting of the base plate and the battery 3 and the locking/unlocking mechanism on the base plate. The whole base plate may also be embedded in the parking platform 21 or fall on the ground of the battery charging and swap station to increase a space for battery swapping, and some hole structures are provided in positions on the base plate corresponding to the roller wheels, such that the battery 3 may smoothly fall on the roller wheel set after the base plate is lowered. The battery swap position may be a position where the locking/unlocking mechanism can lock/unlock the battery 3, for example a position where the locking/unlocking mechanism removes the used battery or installs the fresh battery simply by being driven by the driven motor after the locking/unlocking mechanism is aligned with the chassis of the electric vehicle via the hoisting mechanism.

Further, in order to improve the positioning precision of the locking/unlocking mechanism, it is also possible to provide some positioning pins on the base plate, and the chassis of the electric vehicle is correspondingly provided with positioning holes. By plugging the positioning pins into the positioning holes, the positioning precision of the locking/unlocking mechanism is ensured.

As described above, compared with the configuration in which the transportation and replacement of the battery 3 are carried out by the battery swap robot in the prior art, the invention, by means of innovatively providing the battery transportation unit 22 and the locking/unlocking unit in the battery charging and swap station, allows for battery swapping without lifting the electric vehicle and with the battery swap robot and the lifting device eliminated, such that the steps for battery swapping are reduced and the battery swap efficiency and battery swap experience of a user. It can also be seen from the above description that the battery transportation unit 22 and the locking/unlocking unit have simple structures and are easy to implement, the invention also improves the reliability and stability of the battery charging and swap station, reduces construction cost and facilitates large-scale promotion and application.

Of course, the above embodiments are not unique, and any adjustment made in forms should fall within the scope of protection of the invention without departing from the principles of the invention.

For example, in a possible embodiment, in order to increase the space for battery swapping and improve the battery swap accuracy, it is also possible to provide a vehicle lifting unit (not shown) and/or a leveling unit (not shown) on the parking platform 21. The vehicle lifting unit is configured to lift the electric vehicle parked on the parking platform 21 by a preset distance (for example the preset distance is 10 cm or 20 cm), such that enough operation space is available for the entry and exit of the battery 3 and the bottom locking/unlocking mechanism by raising the electric vehicle to effectively avoid interference caused by the vehicle body such as tires. The leveling unit is configured to adjust the degree of parallelism of the vehicle 4 and the parking platform 21 so as to keep the locking/unlocking mechanism parallel to the bottom of the vehicle and improving the battery swap accuracy of the locking/unlocking mechanism. In the implementation, both the vehicle lifting unit and the leveling unit may be implemented by adopting a motor, an electric cylinder, an air cylinder etc. as a driving power and adopting a vertical slide rail, a cam mechanism, a rigid chain, a screw rod, a gear as a transmission device. For example: a servo motor is adopted as the driving power, and a screw slide rail is adopted as a transmission member and is connected to the set of I-shaped rollers 212, and the screw slide rail is driven by the motor to drive the set of I-shaped rollers 212 to move up and down to complete the lifting or leveling of the chassis of the electric vehicle.

It should be noted that the vehicle lifting unit here may be configured the same as a lifting mechanism for lifting the vehicle 4 in the prior art, except that the vehicle lifting unit enables an increase in the operation space without need to lift the electric vehicle to be very high. For example, the lifting mechanism in the prior art needs to lift the electric vehicle by 80 cm to leave enough space for the entry/exit of the battery swap robot, while the vehicle lifting unit in the invention only needs to lift the vehicle 4 by 20 cm, and even 10 cm, to achieve the same objective. Compared with lifting by 80 cm, lifting by 20 cm or 10 cm greatly reduces the danger to a driver sitting in the vehicle when the battery is swapped, such that the drive may stay in the vehicle while the battery is swapped.

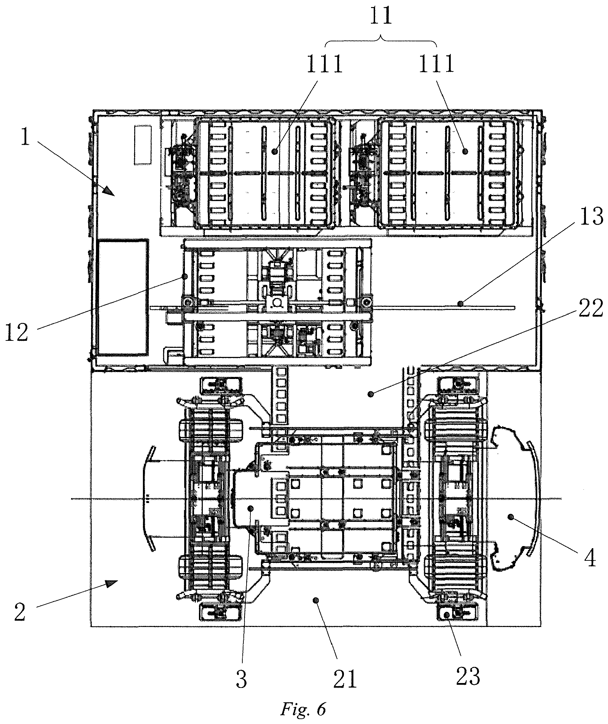

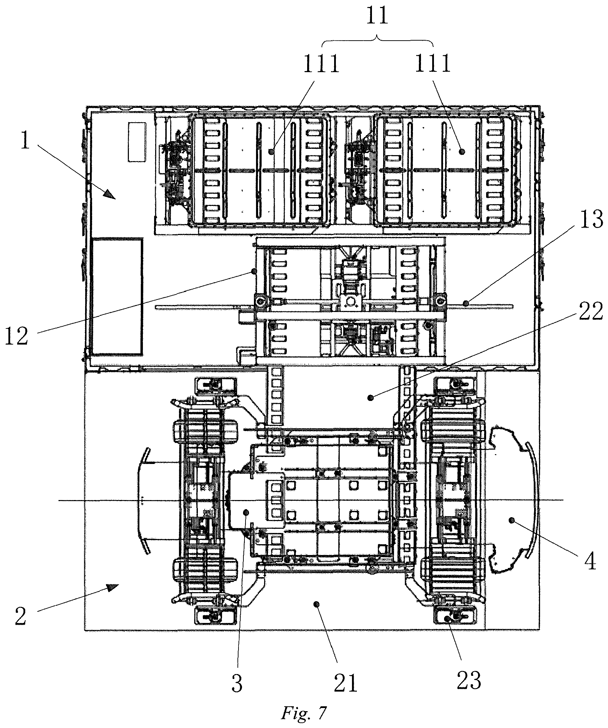

Now referring to Figs. 6 and 7, Fig. 6 is a schematic structural diagram (I) of a battery charging and swap station of the invention with a translation unit; and Fig. 7 is a schematic structural diagram (II) of the battery charging and swap station of the invention with the translation unit.

In another possible embodiment, in order to further reduce the overall size of the battery swap platform and realize miniaturization of the battery charging and swap station, the locking/unlocking unit may also be configured with a translation unit 23. The translation unit 23 is configured to enable the locking/unlocking mechanism to move in the forward/backward direction of the vehicle 4. Similar to the foregoing, there may be various methods for driving the translation unit 23, and the motor, the air cylinder, and the electric cylinder etc. may still act as the driving power, and common screw slide rails, racks or the like are used as transmission members to connect to the chassis of the locking/unlocking unit. The reason for this arrangement is that the battery 3 is not arranged at a centre position of the chassis of the electric vehicle, and the battery swap platform module 2 and the battery charging and storage module 1 in the battery charging and swap station are both centred as much as possible for the ease of design and control, which causes noncoincidence of the centres of the battery 3 and the locking/unlocking mechanism (specifically, the midpoint of the battery 3 along the forward/backward direction of the vehicle 4 does not coincide with that of the locking/unlocking mechanism) and mis alignment between the locking/unlocking mechanism and the battery swap position. At this point, if the midpoint of the battery 3 along the forward/backward direction of the vehicle 4 is to coincide with that of the locking/unlocking mechanism, the floor area of the battery swap platform and the battery charging and swap station needs to be increased. If the floor area on a side of the battery swap platform is increased, the midpoint of the vehicle 4 in the forward/backward direction is moved up or down so as to coincide with the midpoint of the battery 3 in that direction. The configuration in which the translation unit 23 is used to move the locking/unlocking mechanism in the forward/backward direction of the vehicle 4, the translation unit 23, by means of translation, aligns the midpoint of the locking/unlocking mechanism to that of the battery 3, which both fulfills the ease of design and reduces the overall size of the battery swap platform, such that the floor area of the battery charging and swap station is reduced and the miniaturization of the battery charging and swap station is realized.

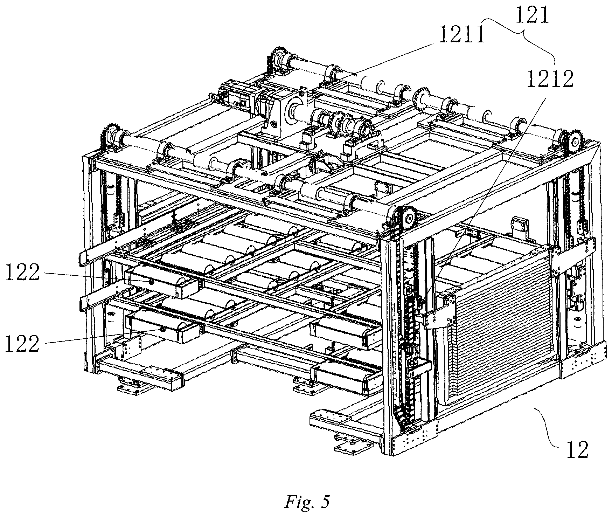

Now referring to Figs. 1 and 5, Fig. 5 is a schematic structural diagram of a battery transfer device of the invention. As shown in Fig. 1, the battery storage device 11 further comprises a plurality of battery rack units 111. Each of the battery rack unit 111 is provided with a first battery transfer unit (not shown), and the first battery transfer unit comprises a second driving mechanism (not shown) and a second transmission mechanism (not shown). The second driving mechanism is able to drive the second transmission mechanism to move, and the second transmission mechanism is able to carry the battery 3, which realizes the function of the battery 3 entering/exiting the battery rack unit 111 for exchanging the battery 3 with the battery transfer device 12. In the implementation, each of the battery rack units 111 may be implemented in a modular arrangement, and the capacity of the battery storage unit may be increased by the addition of layers and rows, so as to meet more frequent battery swap requirements and more storage requirements. The second driving mechanism may still adopts the motor, the electric cylinder, and the air cylinder etc., and the second transmission mechanism adopts a screw nut, a guide rail, a chain, a roller wheel set, and a roller set, etc., in order to achieve the functions of the battery entering/exiting the battery storage device 11 and exchanging the battery with the battery transfer device 12. Of course, the battery rack units 111 may also be implemented by splicing an integral frame to improve the overall stability of the battery storage device 11.

As shown in Fig. 5, in a possible embodiment, the battery transfer device 12 comprises a battery lifting unit 121 and at least one second battery transfer unit 122. The battery lifting unit 121 is configured to raise/lower the at least one battery transfer unit, and the second battery transfer unit 122 is configured to swap the battery 3 with the battery storage device 11 and battery transportation unit 22. Specifically, the battery lifting unit 121 comprises a third driving mechanism 1211 and a third transmission mechanism 1212. The third driving mechanism 1211 is able to drive the third transmission mechanism 1212 to ascend/descend, and the third transmission mechanism 1212 is directly or indirectly connected to the at least one second battery transfer unit 122. The second battery transfer unit 122 comprises a fourth driving mechanism (not shown) and a fourth transmission mechanism (not shown). The fourth driving mechanism is able to drive the fourth transmission mechanism to move, and the fourth transmission mechanism is able to carry the battery 3, which realizes the function of the battery 3 entering/exiting the battery transfer device 12 for exchanging the battery 3 with the battery transfer device 12. In order to ensure the unity of components and facilitate maintenance and replacement, the battery lifting unit 121 and the battery transfer unit 122 here may still adopt the motor, the electric cylinder, the air cylinder etc. as the third driving mechanism 1211 or the fourth driving mechanism, and adopts the screw nut, the guide rail, the chain, etc. as the third transmission mechanism 1212 or the fourth transmission mechanism, so as to lift and lower the battery and exchange the battery 3 with the battery transportation unit 22 and the battery storage device 11. In addition, in order to couple the battery transfer device 12 to the battery storage device 11 and the battery transportation unit 22 respectively, a traverse rail 13 is further provided on the ground of the battery charging and swap station. The battery transfer device 12 may move under the guiding of the guide rail so as to dock with each of the battery rack units 111 in the battery transportation unit 22 and the battery storage device 11.

In a more preferred embodiment, the battery transfer device 12 may be provided with two second battery transfer units 122 arranged one above another or in left and right rows side by side, and the two battery transfer units are configured such that while or after one of the battery transfer units receives/transfers the used battery, the other one of the battery transfer units is able to transfer/receive the fresh battery. The battery transfer units are arranged one above another or in left and right rows side by side such that the battery transfer unit 12 may store two batteries simultaneously. In this way, during the battery swapping, the battery transfer device 12 may complete reception of the used battery and transfer of the fresh battery in a single operation, thus further speeding up the cycle of battery swapping. Also, the battery transfer device 12 may be configured to move parallelly relative to the battery storage device 11 by means of the traverse rail 13 such that when the battery storage device 11 or the battery swap platform module 2 needs to be serviced, enough service space is left by translation of the battery transfer device 12, thus reducing the service difficulty.

A possible battery swap process of the battery charging and swap station of the invention will be described briefly with reference to Figs. 6 and 7.

The driver drives the electric vehicle into the parking platform 21 and the electric vehicle is positioned with the limiting by the first positioning mechanism and the second positioning mechanism →the translation unit 23 causes the locking/unlocking unit to translate to a projection position of the battery swap position →the hoisting mechanism hoists the locking/unlocking mechanism to the battery swap position →the locking/unlocking mechanism removes the used battery, and the used battery falls on the base plate of the locking/unlocking unit →the translation unit 23 causes the locking/unlocking unit to translate to an original position, the hoisting mechanism lowers the locking/unlocking unit, and the used battery falls on the roller wheel set of the battery transportation unit 22 →the battery transportation unit 22 delivers the used battery to the battery transfer device 12, and the upper second battery transfer unit 122 of the battery transfer device 12 receives the used battery →after the second battery transfer unit 122 receives the used battery, the battery lifting unit 121 raises the two second battery transfer units 122 simultaneously, and then the lower second battery transfer unit 122 docks with the battery transportation unit 22 → the lower second battery transfer unit 122 transfers the stored fresh battery to the battery transportation unit 22 →the battery transportation unit 22 receives the fresh battery and transport the fresh battery to the base plate of the locking/unlocking unit →the translation unit 23 causes the locking/unlocking unit to translate to the projection position of the battery swap position again →the hoisting mechanism hoists the locking/unlocking mechanism to the battery swap position again →the locking/unlocking mechanism installs the fresh battery on the electric vehicle →the hoisting mechanism lowers the locking/unlocking mechanism, and the translation unit 23 causes the locking/unlocking unit to translate to the original position →the second positioning mechanism moves in an opposite direction and eliminates the limiting on the tires of the vehicle, and the driver drives the electric vehicle away from the battery charging and swap station.

Of course, the above description of the battery swap process is only to illustrate the working principles of the invention and is not intended to limit the scope of protection of the invention. and adjustments may be made by those skilled in the art to the sequence of actions of the above process or mechanism without departing from the principles of the invention, such that the invention can apply to more specific application scenarios. As an example, after the locking/unlocking mechanism installs the fresh battery on the electric vehicle, the action of the translation unit 23 causing the locking/unlocking unit to translate to the original position and the action of the hoisting mechanism lowering the locking/unlocking mechanism may also be performed simultaneously. As another example, when the battery transportation unit 22 exchanges the battery with the battery transfer device 12, it is also possible for the lower second battery transfer unit 122 of the battery transfer device 12 to first receive the used battery before the upper second battery transfer unit 122 transfers the fresh battery to the battery transportation unit 22.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A battery charging and swap station, **characterized by** comprising a battery charging and storage module and a battery swap platform module,
wherein the battery charging and storage module stores a plurality of batteries, and the battery charging and storage module is configured to dock with and exchange a battery with the battery swap platform module;
and wherein the battery swap platform module is configured to transport the battery and to swap a battery of a vehicle.

2. The battery charging and swap station according to claim 1, **characterized in that** the battery swap platform module comprises:
a parking platform configured to position a vehicle parked thereon;
a locking/unlocking unit configured to remove a used battery from the vehicle and install a fresh battery to the vehicle; and
a battery transportation unit configured to transport the used battery removed by the locking/unlocking unit to the battery charging and storage module and to receive the fresh battery from the battery charging and storage module and transport the fresh battery to the locking/unlocking unit.

3. The battery charging and swap station according to claim 2, **characterized in that** the battery transportation unit is further configured to transport the used battery removed by the locking/unlocking unit to the battery charging and storage module without lifting the vehicle, and to receive the fresh battery from the battery charging and storage module and transport the fresh battery to the locking/unlocking unit.

4. The battery charging and swap station according to claim 3, **characterized in that** the battery transportation unit comprises a first driving mechanism and a first transmission mechanism, wherein the first driving mechanism is able to drive the first transmission mechanism to move, and the first transmission mechanism is able to carry the battery.

5. The battery charging and swap station according to claim 2, **characterized in that** the locking/unlocking unit comprises a hoisting mechanism and a locking/unlocking mechanism, wherein the hoisting mechanism is able to hoist the locking/unlocking mechanism to a battery swap position, and the locking/unlocking mechanism is able to lock/unlock the battery at the battery swap position.

6. The battery charging and swap station according to claim 5, **characterized in that** the locking/unlocking unit is further provided with a translation unit, wherein the translation unit enables the locking/unlocking unit to move in a forward/backward direction of the vehicle.

7. The battery charging and swap station according to claim 2, **characterized in that** the parking platform is provided with a first positioning mechanism and a second positioning mechanism, wherein the first positioning mechanism enables the vehicle to be positioned in a forward/backward direction of the vehicle, and the second positioning mechanism enables the vehicle to be positioned in a width direction of the vehicle.

8. The battery charging and swap station according to claim 7, **characterized in that** the first positioning mechanism comprises a set of V-shaped rollers and a set of I-shaped rollers, wherein the set of V-shaped rollers enables front/rear wheels of the vehicle to be embedded therein, and the set of V-shaped rollers allows the front/rear wheels of the vehicle to move in the width direction; and the set of I-shaped rollers respectively allows the rear/front wheels of the vehicle to be supported thereon and to move in the width direction.

9. The battery charging and swap station according to claim 7, **characterized in that** the second positioning mechanism comprises a front wheel centringpush/pull rod and/or a rear wheel centring push/pull rod, wherein the front wheel centring push/pull rod and/or the rear wheel centring push/pull rod enable the vehicle to be positioned in the width direction by means of pushing/pulling the front/rear wheels of the vehicle.

10. The battery charging and swap station according to claim 2, **characterized in that** the battery swap platform module further comprises a vehicle lifting unit and/or a leveling unit,
wherein the vehicle lifting unit is able to raise the vehicle parked on the parking platform by a preset distance;
and wherein the leveling unit is able to adjust the degree of parallelism between the vehicle and the parking platform.

11. The battery charging and swap station according to any one of claims 2 to 10, **characterized in that** the battery charging and storage module comprises a battery storage device and a battery transfer device,
wherein the battery storage device stores a plurality of batteries, and the battery storage device is configured to dock with and exchange the battery with the battery transfer device; and
the battery transfer device is configured to receive the used battery from the battery transportation unit and transfer the used battery to the battery storage device, and to receive the fresh battery from the battery storage device and transfer the fresh battery to the battery transportation unit.

12. The battery charging and swap station according to claim 11, **characterized in that** the battery storage device further comprise a plurality of battery rack units, wherein each of the battery rack units is provided with a first battery transfer unit, and the first battery transfer unit is configured to enable the battery to enter/exit the battery rack unit.

13. The battery charging and swap station according to claim 12, **characterized in that** the first battery transfer unit comprises a second driving mechanism and a second transmission mechanism, wherein the second driving mechanism is able to drive the second transmission mechanism to move, and the second transmission mechanism is able to carry the battery.

14. The battery charging and swap station according to claim 11, **characterized in that** the battery transfer device comprises a battery lifting unit and at least one second battery transfer unit, wherein the battery lifting unit is configured to enable the at least one second battery transfer unit to ascend/descend, and the second battery transfer unit is configured to enable the battery to enter/exit the battery transfer device.

15. The battery charging and swap station according to claim 14, **characterized in that** the battery transfer device comprises two second battery transfer units, wherein the two second battery transfer units are configured in such a way that:
while or after one of the second battery transfer units receives/transfers the used battery, the other of the second battery transfer units is able to respectively transfer/receive the fresh battery.

16. The battery charging and swap station according to claim 14, **characterized in that** the battery lifting unit comprises a third driving mechanism and a third transmission mechanism, wherein the third driving mechanism is able to drive the third transmission mechanism to ascend/descend, and the third transmission mechanism is connected to the at least one second battery transfer unit.

17. The battery charging and swap station according to claim 14, **characterized in that** the second battery transfer unit comprises a fourth driving mechanism and a fourth transmission mechanism, wherein the fourth driving mechanism is able to drive the fourth transmission mechanism to move, and the fourth transmission mechanism is able to carry the battery.
